# EUROPEAN PATENT SPECIFICATION

(11) **EP 4 140 707 B1**
(45) Date of publication and mention of the grant of the patent: **02.07.2025**
(21) Application number: 21193793.3
(22) Date of filing: 30.08.2021
(51) Int. Cl.: B29C 65/78, B29C 65/48, B29D 99/00, F03D 1/06, B29L 31/08, B29K 305/00, B29K 311/14, B29K 105/20, B29C 70/54

(54) **METHOD FOR PRODUCING A WIND TURBINE ROTOR BLADE AND SHEAR WEB HOLDING DEVICE**
VERFAHREN ZUR HERSTELLUNG EINER WINDTURBINENROTORSCHAUFEL UND HOLMSTEGHALTEVORRICHTUNG
PROCÉDÉ DE FABRICATION D'UNE PALE DE ROTOR D'ÉOLIENNE ET DISPOSITIF DE SUPPORT D'ÂME DE CISAILLEMENT

(43) Date of publication of application: 01.03.2023
(73) Proprietor: Nordex Energy SE & Co. KG, 22419 Hamburg (DE)
(72) Inventor: Thiel, Stefan, 18055 Rostock (DE); Rindt, Philipp, 18146 Rostock (DE)
(74) Representative: Epping - Hermann - Fischer

(56) References cited:
- WO-A1-2017/045690
- WO-A1-2018/224104
- CN-B- 101 905 538
- CN-B- 102 794 724

## Description

The invention concerns a method for producing a wind turbine rotor blade and a shear web holding device for producing a wind turbine blade.

Wind turbines with wind turbine rotor blades are widely known from the prior art and are used to convert wind energy into electrical energy. Rotor blades of wind turbines typically have an outer aerodynamic shell formed by two rigidly connected rotor blade half-shells. The rotor blade half-shells, and thus the rotor blades, are made of one or more composite materials or composite laminates. One or more shear webs are provided within the rotor blades to increase a stiffness of the rotor blade to withstand wind loads, which are often high during operation. Typically, these shear webs are connected to the rotor blade half-shells within the rotor blade via adhesive bonds.

In general a wind turbine rotor blade is made up of an aerodynamic external surface, with a progressively decreasing cross-sectional area in a spanwise direction from the blade root towards its tip and an internal, load-carrying structure which needs to resist both flapwise and edgewise loading. The external, aerodynamic surface is usually configured as a blade shell, generated and defined by a mould. Shell moulds are usually configured as two complementary mould "halves", with one half generating a blade suction (or leeward) side shell and the other half generating a blade pressure (or windward) side shell. The internal, load carrying structure inside the blade may generally extend from the blade root to blade tip and may often be manufactured separately from the shell e.g. in the form of an elongate internal spar or shear web. Wind turbine rotor blades known in the art are typically made from reinforced polymer resin type composite materials, with reinforcing materials including or combining one or more materials such as glass-fibre, wood, carbon fibres or certain metallic elements such as meshes.

The rotor blades are typically manufactured by moulding two rotor blade half-shells in two co-operating mould structures. In a known assembly process, the lower half-shell of the rotor blade is first provided in an upwardly open mould (i.e. a mould for forming and building the lower shell) or on a suitable frame so that its inner side faces upward. Adhesive is applied to the lower shell at the junction between the lower shell and the shear web(s). Each shear web is then lowered onto the lower half-shell at the desired position using a suitable lifting device until it rests on the lower shell. Afterwards, the adhesive bond is then cured, in particular by applying heat to the joint. Next, adhesive is then applied to the bonding area between the half-shells and to the bonding area between the shear web(s) and the top half-shell, and the top half-shell is placed on the shear web(s) and the bottom half-shell, usually by turning one mould half over onto the other. The half-shell and the shear web(s) are cured and thus adhesively bonded together.

For example, to ensure that the half-shells are pressed firmly together while the adhesive is hardening, pressure may be applied to the moulds, either by gravity acting on the mass of the top mould half structure or, more preferably, by pressing the upper mould down onto the bottom mould.

Another process known from the state of the art is the so-called one-shot-bonding process. In this process, the bond line between the first half-shell and the shear web is not completely cured at the time, when the second half-shell is lowered onto the first half-shell for bonding them together. It cures together with the other bond lines after closing the both shell moulds. The process is time-saving, but there is a need for an additional support of the shear web during the closing of the shell mould due to the uncured bondline. Fixtures are needed to prevent the shear web from tipping over and to eliminate shear web movement that could occur during shell bonding. Usually, stabilizers in form of rods are used, which are arranged between the shear web and the inner surface of the blade shell. As an alternative solution WO2017045690A1 suggests to use small positioning jigs which can be handled without a lifting equipment. The positioning jigs are located along the length of the shear web and supported on the mould flange. They have to be removed just before the mould is closing.

WO 2018/224104 A1 discloses a method of making a wind turbine blade comprising first and second half shells and a shear web adhesively bonded between opposed inner surfaces of the half shells.

One task underlying the present invention is to provide a concept for manufacturing a wind turbine rotor blade, which enables a reliable production and contributes to reducing a necessary production time.

According to a first aspect a method for producing a wind turbine rotor blade for a wind turbine is disclosed. The wind turbine rotor blade being made of a rotor blade shell comprising a first half-shell, a second half-shell and a shear web, the shear web being arranged between the rotor blade half-shells running in the longitudinal direction of the wind turbine rotor blade. The method comprises the following steps:
- providing the first half-shell in a mould tool,
- placing the shear web into the first half-shell,
- providing a shear web holding device in a root area of the first half-shell in order to securely hold the shear web in position, wherein the shear web holding device is fixed to the shear web and to the mould tool at a mould end region, the mould end region being associated with a root end of the wind turbine rotor blade,
- placing the second half-shell on the first half-shell,
- adhesive bonding of the first and second half-shells to each other and to the shear web in order to form the rotor blade shell of the wind turbine rotor blade,
- removing the shear web holding device after the step of adhesive bonding.

The inventive method uses a shear web holding device to fix the shear web (or two or more shear webs, e.g. a main shear web and an auxiliary shear web) in the root area of the wind turbine blade. The fixture is designed to stabilize and hold the shear web(s) in position until the second half-shell is placed onto the first half-shell und the half-shells are firmly bonded together. The shear web holding has the advantageous effect that it isn't into contact neither with the inner surface of the rotor blade shell nor with the longitudinal flanges of the mould. The shear web holding device according to the invention provides a freely accessible working space along the shear web flange. It is stable supported at the mould, whereby the location at the mould end region allows a closing of the mould without removing the shear web holding device before.

As already indicated in the introductory part, for producing the wind turbine blade, providing the first half-shell means that the first half-shell is moulded initially in the mould tool, e.g. a first mould tool. The second half-shell is moulded separately, e.g. in a second mould tool.

The formed rotor blade shell defines a chordwise extent between a trailing edge and a leading edge thereof, and a spanwise extent between a root region and a tip thereof.

The shear web holding device (fixture) is a holding structure that is designed to hold and fix the shear web in position. In particular, the shear web holding device is arranged at the root end area of the wind turbine blade. The shear web holding device is made of a stiff and robust construction or structure. For example, the shear web holding device consists of one or more portions, that are fixed to the shear web and which are connected at least partially to the mould tool. The shear web holding device is connected to the mould tool itself to transfer and dissipate weight and/or tilting forces/moments.

The shear web holding device is suitably formed and constructed to hold the entire shear web in position, so that no further fixtures (shear web holding devices) are necessary along the length of wind turbine rotor blade. In particular, by arranging the shear web holding device at the root end area of the blade or the mould tool respectively, the tool can be left in the rotor blade shell until both half-shells are finally bonded together by adhesive, i.e. until curing the adhesive bonding has been finish. Afterwards, the shear web holding device can be removed from the wind turbine blade easily. In contrast, holding devices which are arranged along the length of the rotor blade, e.g. in the middle or at the tip side region, would necessarily be removed prior to placing the second half-shell onto the first, if such holding devices are fixed to the mould tool itself. Otherwise, holding devices which are placed inside the blade (not fixed to the mould tool) would difficult to be removed from the rotor blade anymore or would require space and hinder workers to work inside the blade during the bonding process. The described shear web holding device utilizes the available installation space, e.g. at the root end region, in such a way that workers in this area are not hindered by it.

According to an embodiment, the method comprises:
- prior to placing the at least one shear web, adhesive is provided on the first half-shell and/or the shear web in a respective junction area,
- prior to placing the second half-shell, adhesive is provided on the first half-shell and/or the second half-shell junction area, and adhesive is provided on the second half-shell and/or the shear web in a respective junction area, and
- curing the adhesives, in particular by applying heat to the respective junction areas.

This contributes to the above mentioned functions and advantages.

According to an embodiment, providing the shear web holding device comprises that the shear web holding device is fixed to the shear web and to the mould tool at a mould end region, the mould end region being associated with the root end of the wind turbine rotor blade. In other words, the shear web holding device extends from the shear web to the mould tool. In particular, the shear web holding device extends along the shear web in spanwise direction or diagonally from the shear web towards the mould end region. Thus, the shear web holding device does not extend in an exactly chordwise direction, i.e. orthogonal to a longitudinal direction of the wind turbine blade. This contributes to the above mentioned functions and advantages.

The mould end region is the end region of the mould tool that is associated to the root end of the wind turbine blade.

According to an embodiment, the shear web holding device is fixed at the root end of the shear web and extends from the shear web towards the mould end region.

According to an embodiment, the shear web holding device comprises two arms, the arms being fixed at the shear web and extending towards the mould end region, wherein at least one arm is fixed at the mould tool at the mould end region. Thus, a triangle of forces can be realized by the legs or arms.

According to an embodiment, one arm diagonally extends from the shear web towards the mould end region. In other words, the one arm extends in a direction that has two directional components, namely a longitudinal and a transversal direction component.

According to an embodiment, one arm is fixed at the shear web and extends in spanwise direction in parallel to the longitudinal direction of the shear web towards the mould end region.

According to an embodiment, one arm is fixed at a traversal bar, the traversal bar being firmly secured to the mould tool at the mould end.

According to an embodiment, one arm is fixed to a support point, which is firmly secured to the mould tool. This support point is located at a flange at the mould end region in a three-, six- or nine-o-clock- position.

According to an embodiment, both arms extend from the shear web at a predetermined angle to each other. E.g. they might extend diagonally from the shear web.

According to an embodiment, both arms are fixed at a traversal bar, the traversal bar being firmly secured to the mould tool at the mould end region.

The above embodiments contribute to the mentioned functions, effects and advantages. Optionally, two or more arms can be provided. The shear web holding is firmly fixed to the shear web at one or more fixing points. For example, the shear web can comprise means for attaching the shear web holding device.

According to a second aspect a shear web holding device is disclosed for producing a wind turbine rotor blade for a wind turbine according to a method of any of the above embodiments and description. The shear web holding device is configured:
- to be arranged in a root area of a first half-shell of the wind turbine rotor blade such, that it is fixed to a shear web and to a mould tool at a mould end region in order to securely hold the shear web in position, the shear web being placed into the first half-shell, and
- to be removed
   -- after a second half-shell is placed on the first half-shell,
   -- after the first and second half-shells have been adhesively bonded to each other and to the shear web to form the rotor blade shell of the wind turbine rotor blade.

The shear web holding device essentially enables the above mentioned functions, effects and advantages. The above described features and embodiments with regard to the first aspect, in particular related to the shear web holding device, similarly apply to the described shear web holding device.

Further advantages, features and functions are given in the following exemplary embodiments of the invention, which are explained in connection with the figures. Identical, similar or similarly acting elements are provided with the same reference signs in the figures. Not necessarily all shown and describes elements are provided with reference signs for sake of clarity and visibility.

In the figures:
Figure 1 shows a schematic view of a wind turbine,
Figure 2 shows a schematic view of a wind turbine rotor blade,
Figures 3 and 4 show schematic cross sections of a first half-shell in a mould tool with a shear web holding device according to an embodiment of the invention,
Figure 5 shows a flow chart for a method of producing a wind turbine rotor blade according to an embodiment of the invention,
Figures 6 and 7 show schematic cross sections of a first half-shell in a mould tool with a shear web holding device according to a further embodiment of the invention, and
Figures 8 and 9 show schematic cross sections of a first half-shell in a mould tool with a shear web holding device according to a further embodiment of the invention.

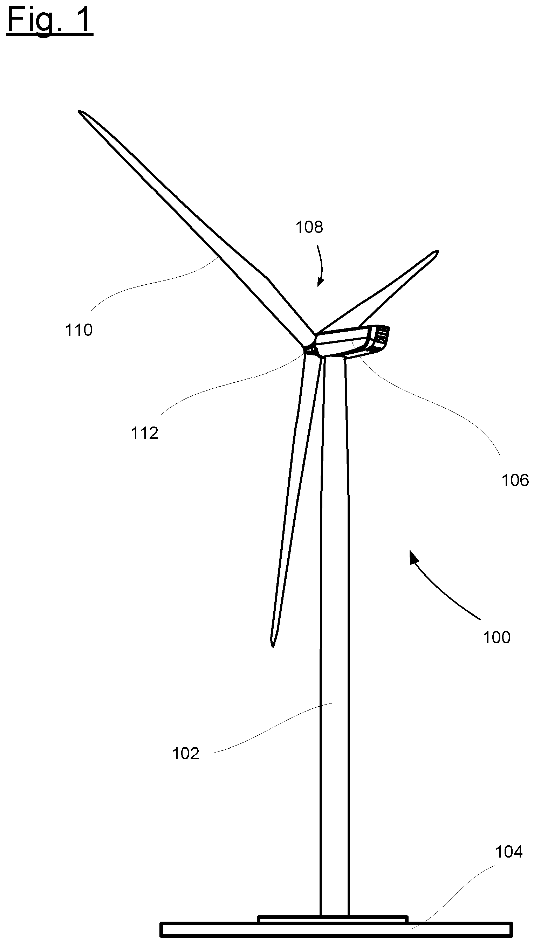

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

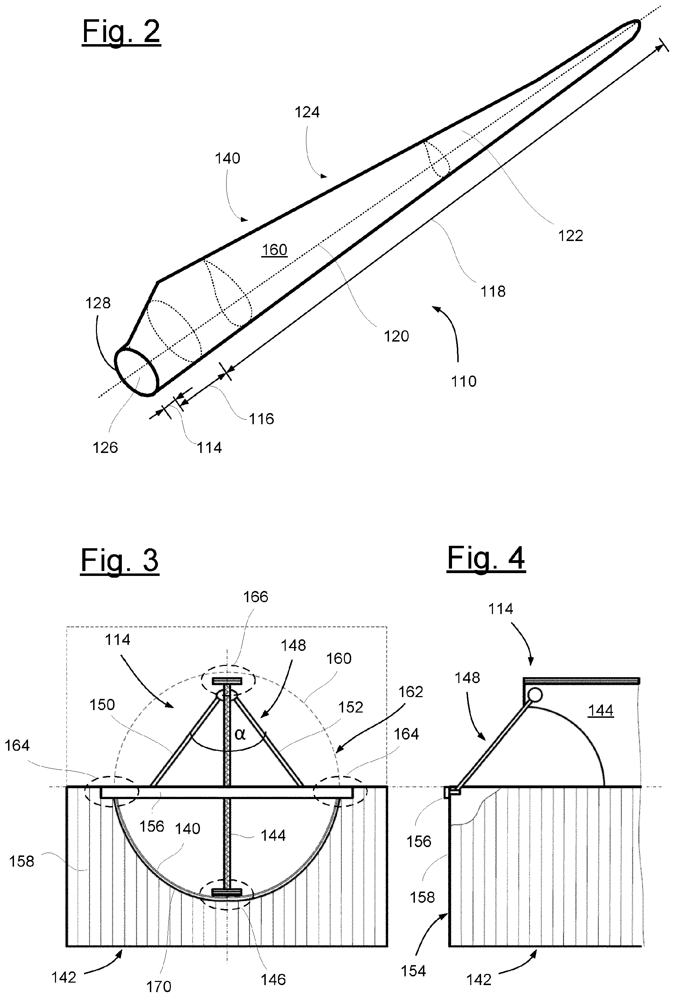

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of rotor blade 110. The rotor blade 110 has a pressure side 122 and an opposite suction side 124 with respect to a longitudinal extension direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender.

The wind turbine rotor blade 110 is made of a first half-shell 140 and a second half-shell 160 and comprises at least one shear web inside, as described in the general part of this description. In the following, a method according to the invention for producing such rotor blade is detailed.

It is referred to figures 3 to 5, which show cross sections of a production stage as well as a flow chart of the production method.

In a first step S1 a first half-shell 140 of the rotor blade 110 is provided in a mould tool 142. The first half-shell 140 is already initially moulded in the mould tool 142. The shear web 144 comprises an "I"-profile.

In a next step S2, a shear web 144 is placed into the first half-shell 140, wherein adhesive (not shown) is provided on the first half-shell 140 and/or the shear web 144 in a respective junction area 146. The shear web 144 runs from the root side to the tip side region of the rotor blade 110.

In a next step S3, a shear web holding device 148 is provided at the root area 114 of the first half-shell 140 in order to securely hold the shear web 144 in position.

The shear web holding device 148 is a stiffening structure or a support structure that firmly holds the shear web in position. The shear web holding device 148 compensates any forces coming from moments **(e.g.** by tilting, moving of the shear web 144) and partly forces coming from a weight of the shear web 144. This is necessary for subsequent steps and in particular, since the adhesive is not cured at this stage of the production and thus not firm adhesive bonding between the first half-shell 140 and the shear web 144 is established for now. Additionally spacer elements can be provided between the shear web flange and the inner surface of the rotor blade shell.

The shear web holding device 148 is made of metal components, e.g. arms or legs and firm mechanical connections. In the shown embodiment of figures 3 and 4, the shear web holding device 148 comprises a first arm 150 and a second arm 152. Both arms 150 and 152 are firmly mounted to the shear web 144 at the root end of the shear web 144 (e.g. at the root end 126 of the blade 110) or nearby. Both arms 150, 152 diagonally extend from the shear web 144 along the longitudinal direction 120 towards a mould end region 154 of the mould tool 142. At the mould end region 154, the arms 150, 152 are firmly connected to a traversal bar 156, which is mounted at the end side, e.g. an flange 170, of the mould tool 142. The arms 150, 152 are arranged at a certain angle α to each other, e.g. in a range of 30° to 90°. Thus, a very stiff construction is provided at the root end region of the blade 110 in order to hold the whole shear web 144 in place. Further, the shear web holding device 148 extends outwards from the root end region 144 towards the mould end region 154.

In a next step S4 the second half-shell 160 (see dotted lines in figure 3) is placed on the first half-shell 140 to essentially form the entire rotor blade shell 162. For example prior to placing the second half-shell 160, adhesive (not shown) is provided on the first half-shell 140 and/or the second half-shell 160 in a respective junction area 164, and adhesive (not shown) is provided on the second half-shell 160 and/or the shear web 144 in a respective junction area 166.

In a next step S5 the first and second half-shells 140, 160 are adhesively bonded to each other and to the shear web 144 to finally form the rotor blade shell 162, wherein the adhesive is cured, in particular by applying heat to the respective junction areas.

In a next step S6, the shear web holding device 148 is removed from the shear web 144 and the mould 142 after the curing process is finished or sufficiently finished.

Essentially, the shear web holding device 148 does not extend in an exactly chordwise direction (from leading to trailing edge). Further, the shear web holding device 148 remains installed to hold the shear web 144 until the curing process for the half-shells 140, 160 is done.

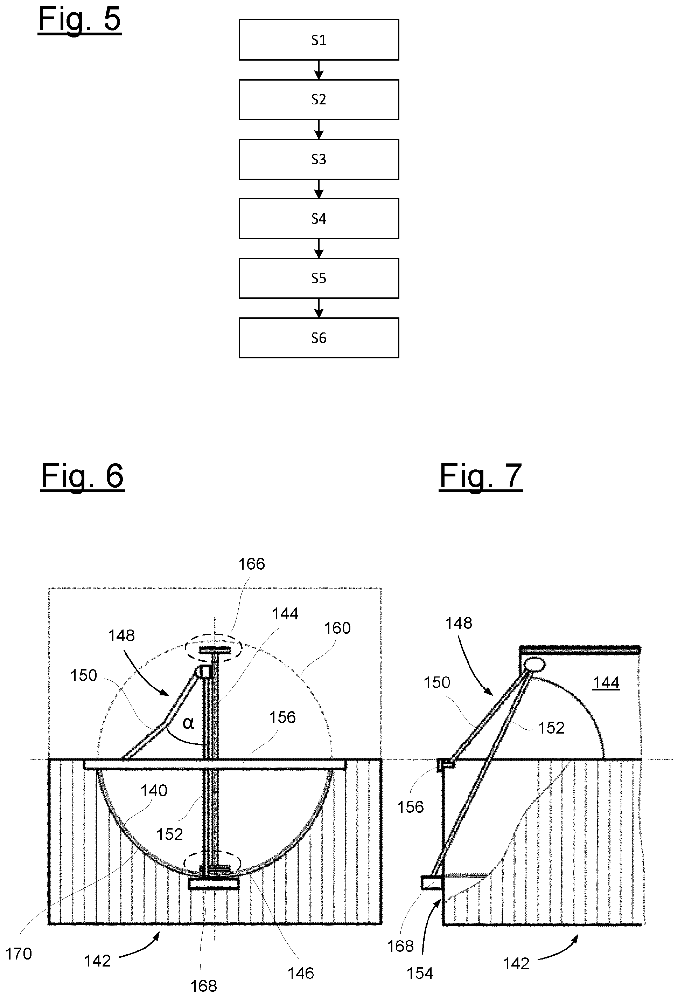

Figures 6 and 7 as well as figures 8 and 9 show further embodiments of the invention with regard to the shear web holding device. The above described method is similarly applicable.

The shear web holding devices 148 of these embodiments comprise the same features, except for the following differences mentioned. Therefore, not all features and reference signs are explained for sake of intelligibility.

With regard to figures 6 and 7, the shear web holding device 148 comprises two arms 150, 152, wherein one arm 150 diagonally extends from the shear web 144 and is fixed to the traversal bar 156. The other arm 152 extends in parallel to the longitudinal direction 120 of the rotor blade 110 (or the shear web 144 respectively) to a support point 168 in a six-o'clock-position at the flange 170 of the mould tool 142. In particular, the other arm 152 is fixed at the mould end region 154.

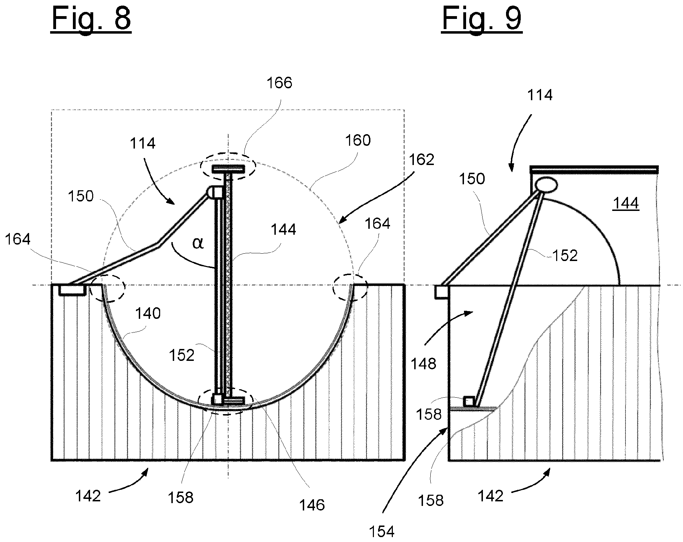

With regard to figures 8 and 9, the first arm 150 is not fixed to a traversal bar, but is directly fixed to a support point 168 in a 9-o'clock-position at the flange 170 of the mould tool 142. The other arm 152 is arranged and supported within in the first half-shell 140 by means of a abutting element 158.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal extension direction
- 122: pressure side
- 124: suction side
- 126: rotor blade root end
- 128: flange connection
- 140: first half-shell
- 142: mould tool
- 144: shear web
- 146: junction area between first half-shell and shear web
- 148: shear web holding device
- 150: first arm
- 152: second arm
- 154: mould end region
- 156: traversal bar
- 158: abutting element
- 160: second half-shell
- 162: rotor blade shell
- 164: junction area between first and second half-shell
- 166: junction area between second half-shell and shear web
- 168: support point
- 170: flange
- Sx: steps

## Claims

1. Method for producing a wind turbine rotor blade (110) for a wind turbine (110), the wind turbine rotor blade (110) having a rotor blade shell (162) made of a first half-shell (140) and a second half-shell (160), wherein a shear web (144) is arranged in the shell running in the longitudinal direction (125) of the wind turbine rotor blade (110), having the following steps:
- providing the first half-shell (140) in a mould tool (142),
- placing the shear web (144) into the first half-shell (140),
- providing a shear web holding device (148) in a root area (114) of the first half-shell (140) in order to securely hold the shear web (144) in position, wherein the shear web holding device (148) is fixed to the shear web (144) and to the mould tool (142) at a mould end region (154), the mould end region (154) being associated with a root end (126) of the wind turbine rotor blade (110),
- placing the second half-shell (160) on the first half-shell (140),
- adhesive bonding of the first and second half-shells (140, 160) to each other and to the shear web (144) to form the rotor blade shell (162) of the wind turbine rotor blade (110),
**characterized by**
- removing the shear web holding device (148) after the step of adhesive bonding.

2. Method according to claim 1, wherein
- prior to placing the shear web (144), adhesive is provided on the first half-shell (140) and/or the shear web (144) in a respective junction area (146),
- prior to placing the second half-shell (160), adhesive is provided on the first half-shell (140) and/or the second half-shell (160) in a respective junction area (164), and adhesive is provided on the second half-shell (160) and/or the shear web (144) in a respective junction area (166), and
- curing the adhesives, in particular by applying heat to the respective junction areas (146, 164, 166).

3. Method according to anyone of claims 1 to 2, wherein the shear web holding device (148) is fixed at the root end (126) of the shear web (144) and extends from the shear web (144) towards the mould end region (154).

4. Method according to anyone of claims 1 to 3, wherein the shear web holding device (148) comprises two arms (150, 152), the arms (150, 152) being fixed at the shear web (144) and extending towards the mould end region (154), wherein at least one arm (150) is fixed at the mould tool (142) at the mould end region (154).

5. Method according to claim 4, wherein one arm (150) diagonally extends from the shear web (144) towards the mould end region (154).

6. Method according to claim 4 or 5, wherein one arm (152) extends in spanwise direction in parallel to the longitudinal direction (125) of the shear web (144) from the shear web (144) towards the mould end region (154).

7. Method according to claim 5 or 6, wherein one arm (150) is fixed at a traversal bar (156), the traversal bar (156) being firmly secured to the mould tool (142) at the mould end region (154).

8. Method according to anyone of claims 4 to 7, wherein one arm (150) is fixed to a support point (168) being firmly secured to the mould tool (142) and being located at a flange (170) at the mould end region in a three- or nine-o-clock-position.

9. Method according to anyone of claims 4 to 8, wherein one arm (152) is fixed to a support point (168) being firmly secured to the mould tool (142) and being located at a flange (170) at the mould end region in a six-o-clock- position.

10. Method according to anyone of claims 5 to 8, wherein both arms (150, 152) extend from the shear web (144) at a predetermined angle (α) to each other.

11. Method according to anyone of claims 5 to 9, wherein both arms (150, 152) are fixed at a traversal bar (156), the traversal bar (156) being firmly secured to the mould tool (142) at the mould end region (154).

12. Shear web holding device (148) for producing a wind turbine rotor blade (110) for a wind turbine (110) according to a method of anyone of claims 1 to 11,
the shear web holding device (148) being configured to be arranged in a root area (114) of a first half-shell (140) of the wind turbine rotor blade (110) in order to securely hold a shear web (144) in position, the shear web (144) being placed into the first half-shell (140), **characterized in that** the shear web holding device (148) is configured to be removed
-- after a second half-shell (160) is placed on the first half-shell (140), and
-- after the first and second half-shells (140, 160) have been adhesively bonded to each other and to the shear web (144) to form the rotor blade shell (162) of the wind turbine rotor blade (110).

## Patentansprüche

1. Verfahren zur Herstellung eines Windturbinenrotorblatts (110) für eine Windturbine (110), wobei das Windturbinenrotorblatt (110) eine Rotorblattschale (162) hat, die aus einer ersten Halbschale (140) und einer zweiten Halbschale (160) besteht, wobei ein Schersteg (144) in der Schale angeordnet wird, der in Längsrichtung (125) des Windturbinenrotorblatts (110) verläuft, mit den folgenden Schritten:
- Bereitstellen der ersten Halbschale (140) in einem Formwerkzeug (142),
- Einsetzen des Scherstegs (144) in die erste Halbschale (140),
- Bereitstellen einer Schersteg-Haltevorrichtung (148) in einem Wurzelbereich (114) der ersten Halbschale (140), um den Schersteg (144) sicher in Position zu halten, wobei die Schersteg-Haltevorrichtung (148) an einem Formendbereich (154) am Schersteg (144) und am Formwerkzeug (142) fixiert wird, wobei der Formendbereich (154) einem Wurzelende (126) des Windturbinenrotorblatts (110) zugeordnet ist,
- Aufsetzen der zweiten Halbschale (160) auf die erste Halbschale (140),
- Verkleben der ersten und zweiten Halbschale (140, 160) miteinander und mit dem Schersteg (144), um die Rotorblattschale (162) des Windturbinenrotorblatts (110) zu bilden,
**gekennzeichnet durch**
- Entfernen der Schersteg-Haltevorrichtung (148) nach dem Schritt des Verklebens.

2. Verfahren nach Anspruch 1, wobei
- vor dem Einsetzen des Scherstegs (144) ein Klebstoff in einem jeweiligen Verbindungsbereich (146) an der ersten Halbschale (140) und/oder am Schersteg (144) vorgesehen wird,
- vor dem Aufsetzen der zweiten Halbschale (160) ein Klebstoff in einem jeweiligen Verbindungsbereich (164) an der ersten Halbschale (140) und/oder zweiten Halbschale (160) vorgesehen wird, und ein Klebstoff in einem jeweiligen Verbindungsbereich (166) an der zweiten Halbschale (160) und/oder am Schersteg (144) vorgesehen wird, und
- die Klebstoffe ausgehärtet werden, insbesondere durch Aufbringung von Wärme auf die jeweiligen Verbindungsbereiche (146, 164, 166).

3. Verfahren nach einem der Ansprüche 1 bis 2, wobei die Schersteg-Haltevorrichtung (148) am Wurzelende (126) des Scherstegs (144) befestigt wird und sich vom Schersteg (144) zum Formendbereich (154) erstreckt.

4. Verfahren nach einem der Ansprüche 1 bis 3, wobei die Schersteg-Haltevorrichtung (148) zwei Arme (150, 152) aufweist, die am Schersteg (144) fixiert sind und sich zum Formendbereich (154) erstrecken, wobei am Formendbereich (154) mindestens ein Arm (150) an dem Formwerkzeug (142) fixiert ist.

5. Verfahren nach Anspruch 4, wobei sich ein Arm (150) diagonal vom Schersteg (144) zum Formendbereich (154) erstreckt.

6. Verfahren nach Anspruch 4 oder 5, wobei sich ein Arm (152) in Spannweitenrichtung parallel zur Längsrichtung (125) des Scherstegs (144) vom Schersteg (144) zum Formendbereich (154) erstreckt.

7. Verfahren nach Anspruch 5 oder 6, wobei ein Arm (150) an einem Querstab (156) fixiert ist und der Querstab (156) am Formendbereich (154) fest an dem Formwerkzeug (142) befestigt ist.

8. Verfahren nach einem der Ansprüche 4 bis 7, wobei ein Arm (150) an einem Halterungspunkt (168) fixiert ist, der fest an dem Formwerkzeug (142) befestigt ist und sich an einem Flansch (170) am Formendbereich in einer Drei- oder Neun-Uhr-Position befindet.

9. Verfahren nach einem der Ansprüche 4 bis 8, wobei ein Arm (152) an einem Halterungspunkt (168) fixiert ist, der fest an dem Formwerkzeug (142) befestigt ist und sich an einem Flansch (170) am Formendbereich in einer Sechs-Uhr-Position befindet.

10. Verfahren nach einem der Ansprüche 5 bis 8, wobei sich beide Arme (150, 152) vom Schersteg (144) aus unter einem vorbestimmten Winkel (α) zueinander erstrecken.

11. Verfahren nach einem der Ansprüche 5 bis 9, wobei beide Arme (150, 152) an einem Querstab (156) fixiert sind, wobei der Querstab (156) am Formendbereich (154) fest an dem Formwerkzeug (142) befestigt ist.

12. Schersteg-Haltevorrichtung (148) zur Herstellung eines Windturbinenrotorblatts (110) für eine Windturbine (110), nach einem Verfahren nach einem der Ansprüche 1 bis 11,
wobei die Schersteg-Haltevorrichtung (148) dafür ausgelegt ist, in einem Wurzelbereich (114) einer ersten Halbschale (140) des Windturbinenrotorblatts (110) angeordnet zu werden, um einen Schersteg (144) sicher in Position zu halten, wobei der Schersteg (144) in die erste Halbschale (140) eingesetzt wird, **dadurch gekennzeichnet, dass** die Schersteg-Haltevorrichtung (148) dafür ausgelegt ist, entfernt zu werden,
- nachdem eine zweite Halbschale (160) auf die erste Halbschale (140) aufgesetzt wurde, und
- nachdem die erste und zweite Halbschale (140, 160) miteinander und mit dem Schersteg (144) verklebt wurden, um die Rotorblattschale (162) des Windturbinenrotorblatts (110) zu bilden.

## Revendications

1. Procédé de fabrication d'une pale de rotor d'éolienne (110) pour une éolienne (110), la pale de rotor d'éolienne (110) présentant une enveloppe de pale de rotor (162) composée d'une première demi-enveloppe (140) et d'une deuxième demi-enveloppe (160), sachant qu'une âme de cisaillement (144) est agencée dans l'enveloppe en s'étendant dans la direction longitudinale (125) de la pale de rotor d'éolienne (110), comportant les étapes suivantes :
- disposition de la première demi-enveloppe (140) dans un outil de moulage (142),
- placement de l'âme de cisaillement (144) dans la première demi-enveloppe (140),
- disposition d'un dispositif de maintien d'âme de cisaillement (148) dans une zone d'emplanture (114) de la première demi-enveloppe (114) afin de maintenir l'âme de cisaillement (144) en position de manière sécurisée, sachant que le dispositif de maintien d'âme de cisaillement (148) est fixé à l'âme de cisaillement (144) et à l'outil de moulage (142) au niveau d'une zone d'extrémité de moule (154), la zone d'extrémité de moule (154) étant associée à une extrémité d'emplanture (126) de la pale de rotor d'éolienne (110),
- placement de la deuxième demi-enveloppe (160) sur la première demi-enveloppe (140),
- liaison par adhésif de la première et de la deuxième demi-enveloppe (140, 160) l'une à l'autre et à l'âme de cisaillement (144) pour former l'enveloppe de pale de rotor (162) de la pale de rotor d'éolienne (110),
**caractérisé par**
- l'enlèvement du dispositif de maintien d'âme de cisaillement (148) après l'étape de liaison par adhésif.

2. Procédé selon la revendication 1, sachant que
- avant le placement de l'âme de cisaillement (144), un adhésif est disposé sur la première demi-enveloppe (140) et/ou l'âme de cisaillement (144) dans une zone de jonction (146) respective,
- avant le placement de la deuxième demi-enveloppe (160), un adhésif est disposé sur la première demi-enveloppe (140) et/ou la deuxième demi-enveloppe (160) dans une zone de jonction (164) respective, et un adhésif est disposé sur la deuxième demi-enveloppe (160) et/ou l'âme de cisaillement (144) dans une zone de jonction (166) respective, et
- le durcissement des adhésifs, en particulier par application de chaleur aux zones de jonction (146, 164, 166) respectives.

3. Procédé selon l'une quelconque des revendications 1 à 2, sachant que le dispositif de maintien d'âme de cisaillement (148) est fixé à l'extrémité d'emplanture (126) de l'âme de cisaillement (144) et s'étend depuis l'âme de cisaillement (144) vers la zone d'extrémité de moule (154).

4. Procédé selon l'une quelconque des revendications 1 à 3, sachant que le dispositif de maintien d'âme de cisaillement (148) comprend deux bras (150, 152), les bras (150, 152) étant fixés à l'âme de cisaillement (144) et s'étendant vers la zone d'extrémité de moule (154), sachant qu'au moins un bras (150) est fixé à l'outil de moule (142) au niveau de la zone d'extrémité de moule (154).

5. Procédé selon la revendication 4, sachant qu'un bras (150) s'étend diagonalement depuis l'âme de cisaillement (144) vers la zone d'extrémité de moule (154).

6. Procédé selon la revendication 4 ou 5, sachant qu'un bras (152) s'étend en direction de l'envergure parallèlement à la direction longitudinale (125) de l'âme de cisaillement (144) depuis l'âme de cisaillement (144) vers la zone d'extrémité de moule (154).

7. Procédé selon la revendication 5 ou 6, sachant qu'un bras (150) est fixé à une barre transversale (156), la barre transversale (156) étant fermement fixée à l'outil de moule (142) au niveau de la zone d'extrémité de moule (154).

8. Procédé selon l'une quelconque des revendications 4 à 7, sachant qu'un bras (150) est fixé à un point de support (168) qui est fermement fixé à l'outil de moule (142) et qui est situé au niveau d'une bride (170) au niveau de la zone d'extrémité de moule dans une position correspondant à trois heures ou neuf heures.

9. Procédé selon l'une quelconque des revendications 4 à 8, sachant qu'un bras (152) est fixé à un point de support (168) qui est fermement fixé à l'outil de moule (142) et qui est situé au niveau d'une bride (170) au niveau de la zone d'extrémité de moule dans une position correspondant à six heures.

10. Procédé selon l'une quelconque des revendications 5 à 8, sachant que les deux bras (150, 152) s'étendent depuis l'âme de cisaillement (144) à un angle prédéterminé (α) l'un par rapport à l'autre.

11. Procédé selon l'une quelconque des revendications 5 à 9, sachant que les deux bras (150, 152) sont fixés à une barre transversale (156), la barre transversale (156) étant fermement fixée à l'outil de moule (142) au niveau de la zone d'extrémité de moule (154).

12. Dispositif de maintien d'âme de cisaillement (148) pour la fabrication d'une pale de rotor d'éolienne (110) pour une éolienne (110) selon un procédé de l'une quelconque des revendications 1 à 11,
le dispositif de maintien d'âme de cisaillement (148) étant configuré pour être agencé dans une zone d'emplanture (114) d'une première demi-enveloppe (140) de la pale de rotor d'éolienne (110) afin de maintenir une âme de cisaillement (144) en position de manière sécurisée, l'âme de cisaillement (144) étant placée dans la première demi-enveloppe (140), **caractérisé en ce que** le dispositif de maintien d'âme de cisaillement (148) est configuré pour être enlevé
- après qu'une deuxième demi-enveloppe (160) est placée sur la première demi-enveloppe (140), et
- après que la première et la deuxième demi-enveloppe (140, 160) ont été liées par adhésif l'une à l'autre et à l'âme de cisaillement (144) pour former l'enveloppe de pale de rotor (162) de la pale de rotor d'éolienne (110).
